# EUROPÄISCHE PATENTSCHRIFT

(11) **EP 3 924 764 B1**
(45) Veröffentlichungstag und Bekanntmachung des Hinweises auf die Patenterteilung: **29.11.2023**
(21) Anmeldenummer: 20708414.6
(22) Anmeldetag: 12.02.2020
(51) Int. Cl.: G02B 5/00, G02B 17/00, G02B 27/50, G01B 11/24, G02B 27/14, G02B 27/28, G01B 9/02055, G01B 9/02098

(54) **VORRICHTUNG ZUM OPTISCHEN MESSEN UND MEHRFACHSPIEGEL**
OPTICAL MEASUREMENT DEVICE AND MULTIPLE MIRROR
DISPOSITIF DE MESURE OPTIQUE ET ENSEMBLE À MULTIPLES MIROIRS

(30) Priorität: 14.02.2019 DE 102019103814
(43) Veröffentlichungstag der Anmeldung: 22.12.2021
(73) Patentinhaber: Hochschule Trier, 54293 Trier (DE)
(72) Erfinder: SCHUTH, Michael, 54340 Riol (DE); PETRY, Christopher, 54293 Trier (DE)
(74) Vertreter: Durm Patentanwälte PartG mbB
(86) Internationale Anmeldenummer: PCT/DE2020/100094
(87) Internationale Veröffentlichungsnummer: WO 2020/164667

(56) Entgegenhaltungen:
- DE-A1-102013 212 685
- US-A- 4 362 361

## Beschreibung

Die Erfindung bezieht sich auf einen Mehrfachspiegel zur Vervielfachung einer eingehenden Wellenfront nach dem Oberbegriff des Anspruchs 1. Ferner bezieht sich die Erfindung auf eine Vorrichtung zum optischen Messen einer Oberfläche nach dem Oberbegriff des Anspruchs 6.

Ein Verfahren zur Phasenmessung von Strahlung, insbesondere Lichtstrahlung, und eine Vorrichtung zur Phasenmessung von Strahlung, insbesondere Lichtstrahlung, sind aus den DE 198 56 400 B4 und DE 010 30 059 B1 bekannt. Bei den vorbekannten Vorrichtungen wird ein Körper mit kohärenter Strahlung einer vorbestimmten Frequenz bestrahlt. Der Körper kann eine diffus reflektierende Oberfläche aufweisen. Die von dem Körper reflektierte Strahlung bzw. die Strahlung, die den Körper bzw. das transparente Medium durchlaufen hat, wird von einer Abbildungsoptik in eine Bildebene abgebildet, in der sich ein Sensor befindet. Bei dem Sensor handelt es sich vorzugsweise um einen Flächensensor. Der Flächensensor kann beispielsweise Teil einer Bildkamera sein, die mit einer entsprechenden Linsenoptik ausgestattet ist. US 4 362 361 A offenbart eine weitere Vorrichtung zur Strahlteilung für interferometrische Messungen.

Der bekannte Aufbau ist vielteilig und raumaufwendig. Der weiträumige Aufbau umfasst viele Bauteile und Optiken. Daher ist der bekannte Aufbau teuer und unübersichtlich. Außerdem bietet der bekannte Aufbau lediglich die Möglichkeit einen kleinen, durch die Blende mit starken Abschattungen versehenen Bereich, zu vermessen. Außerdem ist die Bildqualität des Ergebnisses abhängig von der Messrichtung.

Der Erfindung liegt die Aufgabe zugrunde, eine Vorrichtung zu schaffen, die eine Verminderung der Aufbaugröße bei gleichzeitiger Entkopplung der Ergebnisqualität von der Messrichtung ermöglicht.

Erfindungsgemäß wird die Aufgabe durch die Merkmale der unabhängigen Ansprüche gelöst. Erfinderische Weiterbildungen und Alternativen sind in den abhängigen Ansprüchen enthalten.

Es wird ein Mehrfachspiegel vorgeschlagen, mittels dem eine eingehende Wellenfront einer elektromagnetischen Strahlung vervielfacht wird, sodass nach der Reflektion der Strahlung mehrere Wellenfronten vom Mehrfachspiegel ausgehen. Die elektromagnetische Strahlung breitet sich hierbei in Wellenform aus, wobei jede Welle eine in Ausbreitungsrichtung gerichtete Wellenfront aufweist. Die Wellenfronten weisen dabei eine relative Phasenverschiebung zueinander auf. Dazu sind im Mehrfachspiegel wenigstens ein erster Spiegel, auf den die eingehende Wellenfront als erstes trifft, und ein zweiter Spiegel, an dem die Wellenfront als letztes gespiegelt wird, vorgesehen. Die Spiegel überlagern sich in Bewegungsrichtung der ersten Wellenfront. Damit trotz der Überlagerung in Propagationsrichtung der einfallenden Strahlung die Wellenfront zum zweiten Spiegel gelangen kann, ist der erste Spiegel für die elektromagnetische Strahlung teildurchlässig, während der zweite Spiegel vollreflektierend ist. Dadurch wird ein Teil der einfallenden elektromagnetischen Strahlung am ersten Spiegel reflektiert, während der übrige Anteil der einfallenden Strahlung bis zum zweiten Spiegel propagiert. Dort wird die übrige Strahlung mit einer zeitlichen Verzögerung gegenüber der ersten Reflektion ebenfalls reflektiert. Die zeitliche Verzögerung bewirkt eine Phasenverschiebung der beiden reflektierten Strahlungsanteile. Werden beispielsweise mehrere Mehrfachspiegel miteinander kombiniert, können sich die Phasenverschiebungen addieren und für interferometrische Zwecke genutzt werden. Durch den mehrfachen Aufbau der Spiegel in sandwichartiger Weise wird eine sehr kompakte Bauweise ermöglicht, sodass der Einsatz des Mehrfachspiegels in portablen Messvorrichtung insbesondere außerhalb eines Labors optimal ist. Vorzugsweise kann der Mehrfachspiegel in einer Vorrichtung zur Shearografie verwendet werden.

Damit besonders effizient Konturen eines zu vermessenden Objekts erkannt werden können, kann wenigstens einer der Spiegel die elektromagnetische Strahlung polarisieren. Hierzu kann vorzugsweise der erste und der zweite Spiegel die Strahlung in unterschiedliche Richtungen polarisieren, die vorzugsweise orthogonal zueinander ausgerichtet sein können. Fällt beispielsweise ein gemischt polarisierter Strahl in den Mehrfachspiegel ein, so kann ein Anteil der Strahlung mit einer einheitlichen Polarisationsrichtung vom ersten Spiegel polarisiert werden, während ein zweiter Anteil mit einer unterschiedlichen Polarisation zum zweiten Spiegel durchgelassen werden kann. Am zweiten Spiegel kann der zweite Anteil reflektiert werden. Der zweite Spiegel kann ein einfacher, nichtpolarisierender Spiegel sein. Alternativ kann auch der zweite Spiegel insbesondere orthogonal zum ersten Spiegel polarisieren. Schließlich gehen in jedem Fall zwei unterschiedlich polarisierte Strahlen aus dem Mehrfachspiegel wieder aus. Bei der Verwendung eines Mehrfachspiegels oder mehrerer Mehrfachspiegel können die ausgehenden Strahlen miteinander überlagert werden, wobei die Strahlen gleicher Polarisation miteinander interferieren. Bei der Verwendung eines Mehrfachspiegels interferiert je eine der beiden (vom Mehrfachspiegel reflektierten) polarisierten Wellenfronten mit dem entsprechend polarisierten Anteil der einfachen Wellenfront, die vom einfachen Spiegel reflektiert wird. Die daraus entstehenden Bilder können hinsichtlich der Beschaffenheit des zu vermessenden Objekts ausgewertet werden.

Vorteilhafterweise kann wenigstens einer der Spiegel gegenüber dem wenigstens einen weiteren Spiegel verkippt werden. Dabei kann ein Abstand der Spiegelebenen der Spiegel zueinander variiert werden. Der Abstand zwischen den Spiegelebenen kann konstant oder örtlich und/oder zeitlich variieren. An der Spiegelebene wird die Strahlung unmittelbar reflektiert. Der Abstand bedingt die Phasenverschiebung, sodass sehr präzise Messungen mittels einer mit solch einem Mehrfachspiegel ausgestatteten Vorrichtung durchgeführt werden können. Bei der Verwendung eines Mehrfachspiegels oder mehrerer Mehrfachspiegel können die durch Interferenz entstehenden Bilder durch das Verkippen beeinflusst werden. Bei der Verwendung eines Mehrfachspiegels interferiert je eine der beiden (vom Mehrfachspiegel reflektierten) polarisierten Wellenfronten mit dem entsprechend polarisierten Anteil der einfachen Wellenfront, die vom einfachen Spiegel reflektiert wird. Ferner können sie gegeneinander in der Bildebene verschoben werden.

Bevorzugt ist es, die Spiegel plan auszubilden. Solche Planspiegel können relativ zueinander verkippt werden, sodass die Spiegel einen Winkel einschließen. Somit weichen die Einfalls- und Ausfallswinkel der elektromagnetischen Strahlung auf dem ersten und dem zweiten Spiegel voneinander ab. Eine Phasenverschiebung kann hierdurch bei den austretenden Wellenfronten eingestellt werden.

Eine relative Verstellung der Spiegel zueinander kann vorteilhaft einfach erfolgen, indem der erste Spiegel um eine Rotationsachse rotierbar ist, die zum Beispiel in einem Rahmen eines Spiegelhalters der Spiegel angebracht ist. Die Rotationsachse kann beispielsweise durch die Spiegeleben verlaufen oder vor oder hinter der Spiegelebene angeordnet sein. Der Spiegel wird vorzugsweise aus einer zum zweiten Spiegel parallelen Stellung herausrotiert, bis er einen gewünschten Winkel mit dem zweiten Spiegel einschließt. Eine weitere solche Rotationsachse kann an dem zweiten Spiegel realisiert werden. Es können beide Spiegel solch eine Rotationsachse aufweisen. Alternativ kann nur einer der beiden Spiegel eine solche Rotationsachse aufweisen. Es kann beispielsweise der erste oder der zweite Spiegel mit einer Rotationsachse ausgestattet sein.

Eine Vorrichtung zum optischen Messen einer Oberfläche mit einer vorzugsweise kohärenten Lichtquelle, die einen elektromagnetischen Strahl, wie einem Laser, aussendet kann wenigstens einen Strahlteiler umfassen. Der Strahlteiler kann ein zusammengesetztes zweiteiliges Prisma aus einem für die Strahlung transparenten Material sein. Die Vorrichtung ist insbesondere ein Interferometer, welches interferometrisch die Oberfläche vermisst. Um einen kompakten Aufbau der Vorrichtung zu erreichen und dennoch selbst bei rauen Umweltbedingungen maximale Messgenauigkeit zu erhalten, ist wenigstens ein mindestens zwei zueinander beabstandete Spiegelebenen umfassender Mehrfachspiegel vor und/oder nach dem Strahlteiler in der Propagationsrichtung des elektromagnetischen Strahls angeordnet. Solch eine Vorrichtung kann in vibrationsbelasteten Umgebungen optimal eingesetzt werden. Ferner ist es gegen Temperatur- und hygroskopischen Schwankungen weitgehend unempfindlich.

Zweckmäßigerweise kann wenigstens eine Blende zwischen dem Mehrfachspiegel und dem Strahlteiler vorgesehen sein. Dadurch wird die Messgenauigkeit weiter verbessert. Ferner ist die Blende vorteilhaft verwendbar, um ein räumliches Phasenschieben zu ermöglichen.

Eine gesteigerte Messgenauigkeit kann erreicht werden, indem die Vorrichtung zwei Strahlteiler, zwei Blenden und zwei Mehrfachspiegel umfasst. So kann ein von einer Oberfläche eines zu vermessenden Objekts reflektiertes Licht interferometrisch analysiert werden, wenn es durch eine solche Vorrichtung geleitet wird.

Bei der Verwendung der Mehrfachspiegel kann eine Spiegelebene für die elektromagnetische Strahlung teildurchlässig sein. Insbesondere ist wenigstens einer der Mehrfachspiegel mit einem Spiegel ausgestattet, der gegenüber einem weiteren Spiegel verkippbar ist. Eine auf den Mehrfachspiegel treffende Wellenfront wird hiernach in zwei zueinander Phasenverschobene ausgehende Wellenfronten zerlegt. Besonders bevorzugt ist es, zwei Mehrfachspiegel vorzusehen, die verkippbare Spiegel umfassen.

Eine vorteilhafte Weiterbildung umfasst wenigstens eine Blende, die eine Apertur mit einem Polarisationsfilter aufweist. Durch den Polarisationsfilter können reflektierte Strahlen gefiltert und von störenden Fehlpolarisierungen bereinigt werden.

Solche bereinigten Strahlen sind besonders geeignet für interferometrische Messungen. Hierbei können optimale Ergebnisse erreicht werden, wenn wenigstens eine Blende zwei Aperturen aufweist, die jeweils einen Polarisationsfilter aufweisen, die vorzugsweise orthogonal zueinander ausgerichtet sind. So können zwei durch einen Mehrfachspiegel vervielfachte Strahlen jeweils durch eine Apertur geleitet werden und entsprechend gefiltert werden. Die Strahlen weisen nach dem Durchlaufen der zueinander orthogonal ausgerichteten Filter entsprechende Polarisierungen auf.

Ergänzend oder alternativ zu den Polarisationsfiltern weist wenigstens eine Blende eine Apertur auf, die einen Frequenzfilter beinhaltet, sodass nur bestimmte Wellenlängen die Blende passieren können.

Damit die Vorrichtung eine optimale Messung in allen räumlichen Erstreckungsrichtung des Spezimens gewährleistet, kann die Blende als Gitterblende ausgeführt sein. Vorzugsweise ist die Gitterblende in zwei Dimensionen mit einer bestimmten Spaltbreite der Aperturen ausgestattet. Durch die Begrenzung der Spaltbreite in der Ebene der Blende wird eine zweidimensionale, strahlengeometrische Beeinflussung der Messstrahlung ermöglicht.

Bei der Analyse unterschiedlicher Wellenlängen ist eine Farbkamera besonders vorteilhaft. Die Farbkamera nimmt die durch den wenigstens einen Mehrfachspiegel durchlaufene elektromagnetische Strahlung auf, wobei die Farbkamera die unterschiedlichen Wellenlängen differenzieren kann.

Die Vorrichtung umfasst in Ausgestaltung einen Strahlteiler, der in Propagationsrichtung dem elektromagnetischen Strahl als erstes gegenübersteht. Der Strahl dringt beim Eintritt in die Vorrichtung in den Strahlteiler ein. Dabei wird der Strahl in dem Strahlteiler geteilt und in einer ersten Propagationsrichtung auf den beweglichen Spiegel geleitet. In einer zweiten Propagationsrichtung wird der restliche Strahl des geteilten Strahls auf einen feststehenden Spiegel geführt. Zwischen dem Strahlteiler und den beiden Spiegeln ist jeweils eine Blende angeordnet. Der jeweilige geteilte Strahl durchquert jede Blende wenigstens zweimal, wobei der Strahl in dem Strahlteiler wieder zusammengeführt wird. Aus Richtung einer Kamera ist ein virtueller Doppelspalt zu sehen. Durch diese einfache Ausführung kann eine robuste und platzsparende Vorrichtung geschaffen werden, wobei eine hohe Portabilität gewährleistet ist.

Nach einer Weiterbildung umfasst die Vorrichtung einen weiteren zweiten Strahlteiler, einen Spiegel und einen beweglichen Spiegel, wobei die beiden Strahlteiler in einer diagonalen Ausrichtung zueinander angeordnet sind. Durch einen Teil der Ecken der Strahlteiler kann eine gedachte Diagonale durchgelegt werden, wobei jeweils ein Spiegel auf einer der beiden Seiten der diagonalen Ausrichtung der Strahlteiler angeordnet ist. Die Spiegel sind im Wesentlichen parallel zu der gedachten Diagonalen durch die Strahlteiler ausgerichtet. Zwischen dem Strahlteiler, in den der Strahl als zweites eindringt, also die Teilstrahlen des ersten Strahlteilers eindringen, und den Spiegeln ist jeweils eine Blende angeordnet ist. Die Blenden sind im Wesentlichen parallel zu den Seiten des Strahlteilers, in die der von den Spiegeln reflektierte Strahl eintritt. Selbstverständlich können die Blenden auch irgendwo im Strahlengang der beiden Strahlteiler, vor oder nach den Spiegeln, angeordnet sein.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörigen Zeichnungen näher erläutert.

Es zeigt:
- Fig. 1: ein Mehrfachspiegel mit unterschiedlichen austretenden Stahlen,
- Fig. 2: eine Vorrichtung zum optischen Messen einer Oberfläche mittels Mehrfachspiegel,
- Fig. 3: eine Ausführung mit einem Strahlteiler, einem feststehenden Spiegel und einem beweglichen Spiegel, und
- Fig. 4: eine Ausführung mit zwei Strahlteilern, einem feststehenden Spiegel und einem beweglichen Spiegel.

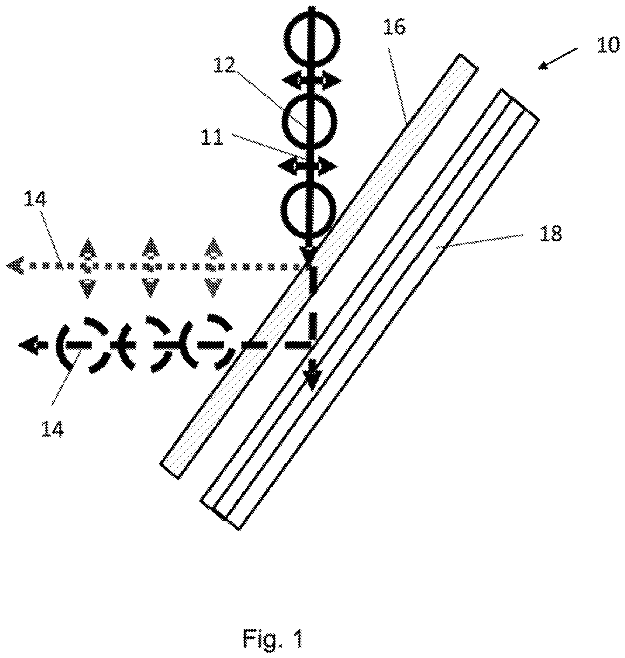

Figur 1 zeigt einen Mehrfachspiegel 10, der eine elektromagnetische Strahlung 11 reflektiert. Die Strahlung 11 kann kohärente Wellen aufweisen, wie es beispielsweise bei einem Laser der Fall ist. Der Mehrfachspiegel 10 vervielfacht eine einfallende Wellenfront 12 der Strahlung 11, sodass mehrere Wellenfronten 14 nach der Reflektion aus dem Mehrfachspiegel 10 austreten. Die Vervielfachung erfolgt durch zwei parallel zueinander angeordnete Spiegel 16, 18, die in Propagationsrichtung der einfallenden und austretenden Strahlung 11 zueinander überlappend ausgerichtet sind. Die Spiegel 16, 18 weisen Spiegelebenen auf, an denen die Reflektion erfolgt. Die Spiegel 16, 18 sind zudem in Propagationsrichtung zueinander beabstandet. Ferner ist der erste Spiegel 16, auf den die Strahlung 11 in Propagationsrichtung trifft, teildurchlässig für die elektromagnetische Strahlung 11, während der zweite Spiegel 18 vollreflektierend ist.

Trifft nun eine einfallende Wellenfront 12 auf den ersten Spiegel 16, wird ein Anteil reflektiert und zurückgeworfen. Hierbei entspricht der Einfallswinkel dem Ausfallswinkel bezüglich der Spiegelebene. Der übrige Anteil wird an der Spiegelebene des zweiten Spiegels 18 reflektiert. Da die Spiegel 16, 18 zueinander beabstandet sind, verstreicht eine gewisse Zeit zwischen der ersten Reflektion und der zweiten Reflektion, sodass die Reflektion am ersten Spiegel 16 zeitlich vor der Reflektion an dem zweiten Spiegel 18 erfolgt. Hierdurch ergibt sich eine Phasenverschiebung zwischen den beiden ausgehenden Wellenfronten 14 der ersten und der zweiten Reflektion.

Der einfallende Strahl 11 ist in unterschiedlichen Richtungen polarisiert. Die Spiegel 16, 18 können derart beschaffen sein, dass die reflektierte Strahlung in nur eine Richtung polarisiert wird. Dabei können die beiden Spiegel 16, 18 die Strahlung 11 in zwei zueinander orthogonale Richtungen polarisieren. Die jeweilige an den Spiegeln 16, 18 reflektierte Strahlung 11 ist hierbei lediglich in eine Richtung polarisiert. Alternativ kann beispielsweise nur der erste Spiegel 16 polarisierend sein, wobei der reflektierte Teil der Strahlung 11 eine einheitliche Polarisation aufweist. Der übrige Anteil der Strahlung 11 dringt bis zum zweiten Spiegel 18 vor und weist eine orthogonale Polarisation auf. Dieser zweite Anteil kann am zweiten Spiegel 18 reflektiert werden, wobei der zweite Spiegel 18 keine polarisierende Eigenschaft aufweist. Dennoch tritt der zweite Anteil polarisiert aus dem Mehrfachspiegel 10 aus.

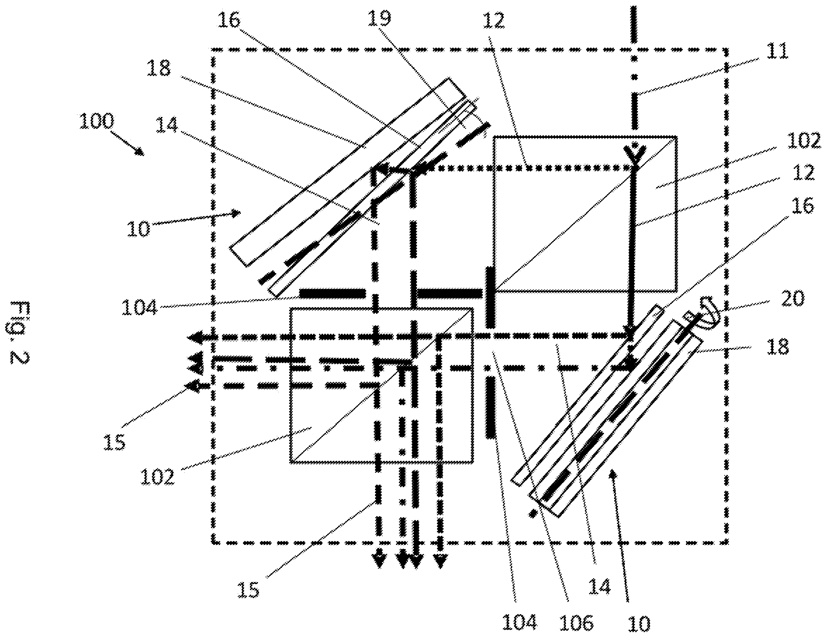

Figur 2 zeigt eine Vorrichtung 100 zum optischen Messen einer Oberfläche, die zwei Mehrfachspiegel 10, zwei Strahlteiler 102 und zwei Blenden 104 umfasst. Der einfallende Strahl 11 wird erzeugt, indem die zu vermessende Oberfläche mit einem kohärenten Licht bestrahlt wird. Das kohärente Licht ist zum Beispiel ein Laser. Durch die Verwendung eines Mehrfachspiegels oder zweier Mehrfachspiegel 10 werden die mit der Phasenverschiebung behafteten ausgehenden Wellenfronten 14 der einzelnen Mehrfachspiegel 10 addiert und die durch die Spiegel 16, 18 reflektierte Strahlung 11 kann miteinander interferieren. Bei der Verwendung eines Mehrfachspiegels interferiert je eine der beiden (vom Mehrfachspiegel reflektierten) polarisierten Wellenfronten mit dem entsprechend polarisierten Anteil der einfachen Wellenfront, die vom einfachen Spiegel reflektiert wird.

Die durch die zu vermessende Oberfläche reflektierte Strahlung 11 fällt zuerst in einen Strahlteiler 102 ein. Der Strahlteiler 102 kann hierbei einen rechteckigen Querschnitt aufweisen, wobei der einfallende Strahl 11 an einer Planseite des Strahlteilers 102 einfällt, die insbesondere keinem der Mehrfachspiegel 10 zugewandt ist. Nachdem der Stahl 11 in den ersten Strahlteiler 102 eingetreten ist und der Strahl 11 in zwei weitere Strahlen 11 aufgeteilt wird, deren Wellenfronten 12 jeweils auf einen Mehrfachspiegel 10 einfallen, werden die Strahlen 11 wiederum durch die Mehrfachspiegel 10 verdoppelt. Die so aus dem jeweiligen Mehrfachspiegel 10 austretenden Wellenfronten 14 werden auf den zweiten Strahlteiler 102 gelenkt. Dabei durchlaufen die jeweiligen verdoppelten und phasenverschobenen Wellenfronten 14 jeweils eine Blende 104, die jeweils an einer Planseite des zweiten Strahlteilers 102 angeordnet sind. Alternativ können die Blenden 104 an beliebiger Position im jeweiligen Strahlengang zwischen dem ersten Strahlteiler 102 und dem zweiten Strahlteiler 104 positioniert sein. In dem zweiten Strahlteiler 102 werden die von den Mehrfachspiegeln 10 ausgehenden phasenverschobenen Strahlen 11 wiederum verdoppelt, sodass jeweils zwei Wellenfronten 15 mit gleicher Phase in Richtung einer Kamera geleitet werden. Es werden die Strahlen der beiden Mehrfachspiegel 10 zusammengeführt und in zwei Bündel geteilt, die jeweils an einer Seite des Strahlteilers 102 austreten. Beim Zusammenführen interferieren die Strahlen 11 und erzeugen ein Interferenzbild, welches spektral beispielsweise mittels Fourieranalyse zerlegt werden kann.

Die beiden Strahlteiler 102 sind in einer Reihe entlang einer Diagonalen bezüglich der in die Mehrfachspiegel 10 ein- und ausfallenden Strahlenverläufe angeordnet. Links und rechts neben den Strahlteilern 102 sind die Mehrfachspiegel 10 in etwa zwischen den Strahlteilern 102 angeordnet. Die beiden Blenden 104 sind an Planseite des zweiten Strahlteilers 102 angeordnet, die dem ersten Strahlteiler 102 zugewandt sind. Alternativ können die Blenden 104 an beliebiger Position im jeweiligen Strahlengang zwischen dem ersten Strahlteiler 102 und dem zweiten Strahlteiler 104 positioniert sein. Die beiden Blenden 104 stehen ungefähr senkrecht aufeinander. Ferner können die Blenden 104 von der zueinander senkrechten Positionierung abweichen.

Die Mehrfachspiegel 10 umfassen jeweils zwei Spiegel 16, 18, wobei jeweils einer der Spiegel 16, 18 eine Rotationsachse aufweist. Beispielsweise kann der erste Spiegel 16 und/oder der zweite Spiegel 18 mit einer Rotationsachse versehen sein. Ferner kann ein Mehrfachspiegel 10 einen rotierbaren ersten Spiegel 16 und der weitere Mehrfachspiegel 10 einen rotierbaren zweiten Spiegel aufweisen. Dabei können die Rotationsachsen senkrecht zueinander ausgerichtet sein. Durch das Rotieren des Spiegels 16, 18 kann eine Phasenverschiebung der vervielfachten Strahlen 11 erreicht werden. Die Phasenverschiebung ist vom Winkel 19 abhängig, der zwischen den beiden Spiegel 16, 18 durch die Rotation eingestellt wird. Ferner kann durch die Verstellung eines Spiegels eine Vershearung der Strahlung 11 erreicht werden. Die jeweiligen Interferenzbilder der polarisierten Strahlen des ersten und des zweiten Spiegels 16, 18 der beiden Mehrfachspiegel 10 können durch die Rotation gegeneinander verschoben werden. Die Rotationsachse ist zum Beispiel in einem Rahmen des Mehrfachspiegels 10 realisiert.

Durch den zweiten Strahlteiler 102 sind die Blenden 104 an den austretenden Planseiten des zweiten Strahlteilers 102 als virtuelle Doppelblende sichtbar, da die beiden phasenverschobenen Strahlen der jeweiligen Mehrfachspiegel 10 nach dem Durchtritt durch die jeweilige Blende 104 zusammengeführt werden. Der Doppelblendenabstand bedingt eine räumliche Trägerfrequenz für das räumliche Phasenverschieben. Die Trägerfrequenz wird hierdurch von der Rotationsstellung der Spiegel 16, 18 entkoppelt.

Die Spiegel 16, 18 polarisieren durch die Reflektion die Strahlung 11 in unterschiedliche Richtungen. Beispielsweise kann der teildurchlässige erste Spiegel 16 lediglich Strahlung 11 einer bestimmten Polarisation reflektieren, sodass die durchgelassene Strahlung 11 vom zweiten Spiegel 18 reflektiert wird. Hierbei kann die Strahlung 11 durch die beiden ersten Spiegel 16 in die gleiche Richtung polarisiert werden. Die reflektierten Strahlen 11 mit der gleichen Polarisationsrichtung sind miteinander interferenzfähig. Ebenso können die Strahlen 11 der zweiten Spiegel in die gleiche Richtung polarisiert werden. Hierdurch sind sie ebenfalls miteinander interferenzfähig. Im Gegensatz dazu können die Strahlen 11 des ersten Spiegels mit dem zweiten Spiegel nicht interferieren, da die Polarisationen unterschiedlich zueinander sind. Wird nun der erste polarisierende Spiegel 16 des einen Mehrfachspiegels 10 zum ersten polarisierenden Spiegel 16 des anderen Mehrfachspiegels 10 verkippt, ergibt sich durch die reflektierten Strahlen 11 ein Interferenzbild, welches als versheartes Bild verstanden werden kann. Es kann beispielsweise eine Shearung in waagerechter Richtung aufweisen, welches eine shearografische Vermessung erlaubt. Unabhängig davon kann der zweite Spiegel 18 des einen Mehrfachspiegels 10 zum zweiten Spiegel 18 des weiteren Mehrfachspiegels 10 verkippt werden, wodurch sich durch die Interferenz der reflektierten Strahlen 11 ein weiteres versheartes Bild ergibt. Beispielsweise kann die Shearung in vertikaler Richtung erfolgen.

Durch die beiden Mehrfachspeigel 10 wird so eine in horizontaler Richtung vershearte Wellenfront 14 und eine dazugehörige Referenzwellenfront, sowie eine in vertikaler Richtung vershearte Wellenfront und eine dazugehörige Referenzwellenfront erzeugt. Durch die Verwendung der Blenden 104 werden somit Trägerfrequenzen für die jeweiligen interferenzfähig polarisierten Wellenfronten für die horizontale und die vertikale Richtung erzeugt. Hierdurch ergeben sich im Fourierraum separate Spektren.

Beide Bilder, die durch die Interferenz der von den Paaren der ersten und der zweiten Spiegel 16, 18 ausgehenden Strahlen 11 erzeugt werden, werden durch eine Kamera erfasst. Zur unabhängigen Auswertung der beiden vershearten Bilder kann deren Polarisation als Trennungskriterium genutzt werden. Beispielsweise kann dies durch unterschiedliche räumliche Trägerfrequenzen je nach Polarisation realisiert werden. Dazu können die beiden Blenden 104 polarisationsspezifische Aperturen 106 aufweisen. Die Aperturen 106 der Blenden 104 bestimmen durch ihre Breite die Frequenzbreite des interferometrisch bestimmten Bildes bei einer Fourieranalyse proportional. Die Apertur 106 kann mit einem Polarisationsfilter ausgestattet sein.

Ergänzend oder alternativ kann die Apertur 106 mit einem Frequenzfilter ausgestattet sein, der nur eine bestimmte Wellenlänge der Strahlung 11 hindurch lässt. Durch das Filtern bestimmter Wellenlängen wird die Messpräzision verbessert, da beispielsweise die Aperturgröße auf lediglich eine Wellenlänge eingestellt werden kann. Dadurch werden Bildfehler vermieden. Eine Farbkamera ermöglicht eine Analyse der gefilterten Interferenzbilder aus unterschiedlichen Wellenlängen. Ein Frequenzfilter kann beispielsweise durch Farbfilter erzeugt werden.

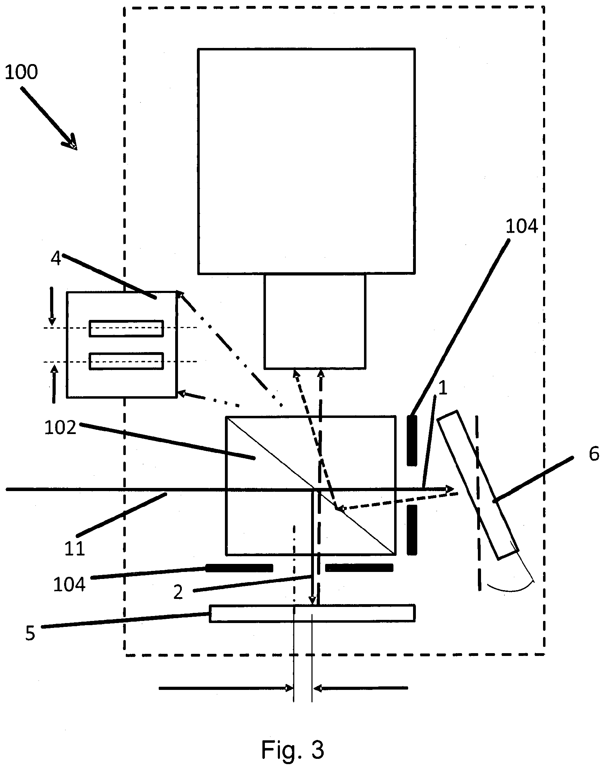

Figur 3 zeigt eine Vorrichtung 100, die einen Strahlteiler 102 umfasst, der in Propagationsrichtung des elektromagnetischen Strahls 11 angeordnet ist und in den der Strahl 11 als erstes eintritt. Der Strahl 11 dringt beim Eintritt in die Vorrichtung in den Strahlteiler 102 ein und wird dabei in dem Strahlteiler 102 geteilt. Ein Teil des Strahls 11 wird in einer ersten Propagationsrichtung 1 auf den beweglichen Spiegel 6 geleitet. In einer zweiten Propagationsrichtung 2 wird der restliche Strahl des geteilten Strahls 11 auf einen feststehenden Spiegel 5 geführt. Zwischen dem Strahlteiler 102 und den beiden Spiegeln 6, 5 ist jeweils eine Blende 104 angeordnet. Der jeweilige durch den Strahlteiler 102 erhaltene Teilstrahl durchquert jede Blende 104 wenigstens zweimal, wobei der Teilstrahl einmal vor der Reflektion und nach der Reflektion auf dem jeweiligen Spiegel 6, 5 einmal durch die Blende 104 tritt. Die Teilstrahlen werden im Strahlteiler 102 wieder zusammengeführt und zu einer Kamera geleitet. Aus Richtung der Kamera ist ein virtueller Doppelspalt 4 zu sehen.

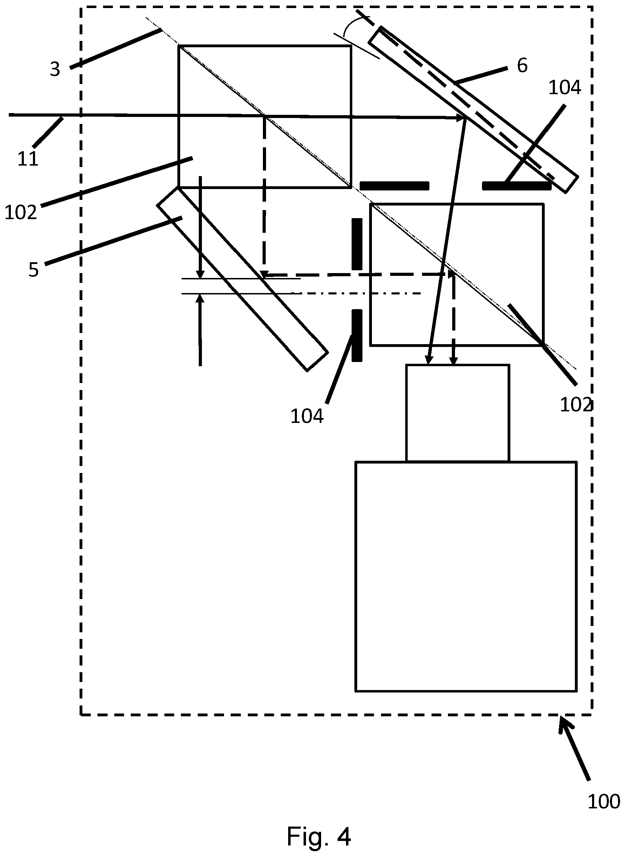

Figur 4 offenbart eine Weiterbildung, die einen weiteren zweiten Strahlteiler 102 umfasst. Ferner ist ein Spiegel 5 und ein beweglicher Spiegel 6 Teil der Vorrichtung 100, wobei die beiden Strahlteiler 102 in einer diagonalen Ausrichtung zueinander angeordnet sind. Durch einen Teil der Ecken der Strahlteiler 102 kann eine gedachte Diagonale 3 hindurchgelegt werden, sodass ein Teil der Ecken der Strahlteiler 102 miteinander fluchten. Es ist jeweils ein Spiegel 6, 5 auf einer der beiden Seiten der diagonalen Ausrichtung der Strahlteiler 102 angeordnet. Die Spiegel 6, 5 sind im Wesentlichen parallel zu der gedachten Diagonalen 3 durch die Strahlteiler 102 ausgerichtet. Der bewegliche Spiegel 6, kann von der parallelen Ausrichtung um einen Einstellwinkel abweichen, wobei er jedoch in eine parallele Position zurückgestellt werden kann. Zwischen dem Strahlteiler 102, in den der Strahl 11 als zweites eindringt, also die Teilstrahlen des ersten Strahlteilers 102 eindringen, und den Spiegeln 5, 6 ist jeweils eine Blende 104 angeordnet ist. Die Blenden 104 sind im Wesentlichen parallel zu den Seiten des Strahlteilers 102, in die der von den Spiegeln 5,6 reflektierte Strahl 11 eintritt.

### Bezugszeichen

- 1: erste Propagationsrichtung
- 2: zweite Propagationsrichtung
- 3: Diagonale
- 4: virtueller Doppelspalt
- 5: feststehender Spiegel
- 6: beweglicher Spiegel
- 10: Mehrfachspiegel
- 11: elektromagnetischer Strahlung
- 12: eingehende Wellenfront
- 14: ausgehende Wellenfronten
- 15: Wellenfronten in Richtung Kamera
- 16: erster Spiegel
- 18: zweiter Spiegel
- 19: Winkel
- 20: Rotationsachse
- 100: Vorrichtung
- 102: Strahlteiler
- 104: Blenden
- 106: Apertur

## Patentansprüche

1. Vorrichtung zum interferometrischen, optischen Messen einer Oberfläche umfassend
eine kohärente Lichtquelle, die einen elektromagnetischen Strahl (11) aussendet;
zwei Strahlteiler (102);
zwei Blenden (104);
einen Mehrfachspiegel (10) mit zwei zueinander beabstandeten Spiegelebenen umfassend einen ersten Spiegel (16), auf den der eingehende Strahl (11) als erstes auftrifft, und einen zweiten Spiegel (18), an dem der Strahl (11) als letztes gespiegelt wird, wobei sich die Spiegel (16, 18) in Bewegungsrichtung der ersten Wellenfront (12) überlagern und der erste Spiegel (16) für den elektromagnetische Strahl (11) teildurchlässig und der zweite Spiegel (18) vollreflektierend ist; und
wobei
der elektromagnetische Strahl (11) auf den ersten Strahlteiler trifft, von dem ersten Strahlteiler (102) auf den Mehrfachspiegel (10) gelenkt wird und anschließend auf den zweiten Strahlteiler (102) trifft,
wobei eine der Blenden (104) in dem Strahlengang zwischen den beiden
Strahlteilern (102) derart angeordnet ist, dass der Strahl durch diese eine
Blende (104) verläuft.

2. Vorrichtung nach Anspruch 1, umfassend einen zweiten Mehrfachspiegel (10), wobei der elektromagnetische Strahl (11) auf den ersten Strahlteiler trifft, von dem ersten Strahlteiler (102) in zwei Propagationsrichtungen aufgeteilt und auf je einen der Mehrfachspiegel (10) gelenkt wird und anschließend beide Teilstrahlen auf den zweiten Strahlteiler (102) treffen, wobei je eine der Blenden (104) in dem Strahlengang zwischen den beiden Strahlteilern (102) derart angeordnet ist, dass jeder Teilstrahl durch eine der Blenden (104) verläuft.

3. Vorrichtung nach Anspruch 1 oder 2, so ausgelegt, dass ein Spiegel (16, 18) des Mehrfachspiegels (10) gegenüber dem anderen Spiegel (18, 16) derart verkippbar ist, dass die Spiegel (16, 18) einen Winkel (19) einschließen und dass eine auf den Mehrfachspiegel (10) treffende Wellenfront (12) in zwei zueinander phasenverschobene ausgehende Wellenfronten (14) zerlegt wird.

4. Vorrichtung nach Anspruch 3, wobei die Spiegel (16, 18) des Mehrfachspiegels (10) plan sind.

5. Vorrichtung nach einem der vorhergehenden Ansprüche, wobei der erste und/oder zweite Spiegel (16, 18) des Mehrfachspiegels (10) um eine Rotationsachse (20) rotierbar sind, die bevorzugt in einem Rahmen eines Spiegelhalters der Spiegel (16, 18) angebracht sind.

6. Vorrichtung nach Anspruch 2, wobei der eine Mehrfachspiegel einen Spiegel aufweist, der gegeüber dem anderen Spiegel verkippbar ist und der andere Mehrfachspiegel (10) einen Spiegel aufweist der gegenüber dem anderen Spiegel (16, 18) um eine Rotationsachse (20) rotierbar ist.

7. Vorrichtung nach einem der vorhergehenden Ansprüche, wobei der erste Spiegel (16) die elektromagnetische Strahlung polarisiert, wobei vorzugsweise der erste Spiegel (16) Strahlung einer bestimmten Polarisation reflektiert und einer dazu unterschiedlichen vorzugsweise orthogonalen Polarisation durchlässt.

8. Vorrichtung nach einem der vorhergehenden Ansprüche, wobei eine Kamera den durch den Mehrfachspiegel (10) durchlaufene elektromagnetische Strahl (11) aufnimmt, die bevorzugt als Farbkamera ausgebildet ist.

9. Vorrichtung zum interferometrischen, optischen Messen einer Oberfläche umfassend
- eine kohärente Lichtquelle, die einen elektromagnetischen Strahl (11) aussendet,
- einen Strahlteiler (102), der den Strahl (11) in einen ersten Teilstrahl in einer ersten Propagationsrichtung und in einen zweiten Teilstrahl in einer zweiten Propagationsrichtung aufteilt,
- zwei Spiegel (5, 6), von denen der eine ein feststehender Spiegel (5) und der andere ein beweglicher Spiegel (6) ist,
- zwei Blenden (104), wobei je eine Blende zwischen dem Strahlteiler (102) und den Spiegeln (5, 6) derart angeordnet ist, dass jeder Teilstrahl jeweils eine Blende (104) zweimal durchquert,
- die beiden Teilstrahlen nach Reflexion an den Spiegeln auf den Strahlteiler (102) treffen und in diesem wieder zusammengeführt werden,
- wobei die Blenden (104) derart angeordnet sind, dass nach dem Zusammenführen der beiden Teilstrahlen in dem Strahlteiler (102) der Strahl einem Strahl nach Durchgang durch einen Doppelspalt entspricht.

10. Vorrichtung nach Anspruch 9, wobei der zusammengeführte Strahl nach Verlassen des Strahlteilers (102) zu einer Kamera geleitet wird, wobei aus Richtung der Kamera ein virtueller Doppelspalt (4) zu sehen ist.

11. Vorrichtung nach einem der vorhergehenden Ansprüche, wobei wenigstens eine der Blenden (104) eine Apertur (106) aufweist, die bevorzugt einen Polarisationsfilter oder einen Frequenzfilter, der nur bestimmte Wellenlängen passieren lässt, umfasst.

12. Vorrichtung nach einem der vorhergehenden Ansprüche, wobei wenigstens eine der Blenden (104) zwei Aperturen aufweist, die bevorzugt jeweils einen Polarisationsfilter aufweisen, die vorzugsweise orthogonal zueinander ausgerichtet sind.

13. Vorrichtung nach einem der vorhergehenden Ansprüche, **dadurch gekennzeichnet, dass** eine der Blenden (104) als Gitterblende ausgeführt ist und vorzugsweise in zwei Dimensionen bestimmte Spaltbreiten der Aperturen (106) aufweist, wobei die Spaltbreiten insbesondere die gleichen Abmessungen aufweisen.

## Claims

1. Device for interferometric optical measurement of a surface comprising
a coherent light source emitting an electromagnetic beam (11);
two beam splitters (102);
two diaphragms (104);
a multiple mirror (10) with two mirror planes arranged at a distance from each other, comprising a first mirror (16), on which the incident beam (11) first impinges, and a second mirror (18) on which the beam (11) is last reflected, wherein the mirrors (16, 18) are superimposed in the direction of movement of the first wavefront (12) and the first mirror (16) is partially transparent for the electromagnetic beam (11) and the second mirror (18) is fully reflective; and
wherein
the electromagnetic beam (11) impinges on the first beam splitter, is directed by the first beam splitter (102) onto the multiple mirror (10) and subsequently impinges on the second beam splitter (102),
wherein one of the diaphragms (104) is arranged in the beam path between the two beam splitters (102), such that the beam passes through this diaphragm (104).

2. Device according to Claim 1, comprising a second multiple mirror (10), wherein the electromagnetic beam (11) impinges on the first beam splitter, is split by the first beam splitter (102) into two directions of propagation and is respectively directed onto one of the multiple mirrors (10), and subsequently both partial beams impinge on the second beam splitter (102),
wherein one of the diaphragms (104) is arranged in the beam path between each of the two beam splitters (102), such that each partial beam passes through one of the diaphragms (104).

3. Device according to claim 1 or 2, configured such that one mirror (16, 18) of the multiple mirror (10) is tiltable relative to the other mirror (18, 16) in such a manner that the mirrors (16, 18) enclose an angle (19) and that a wavefront (12) incident on the multiple mirror (10) is divided into two outgoing wavefronts (14) which are phase-shifted with respect to each other.

4. Device according to claim 3, wherein the mirrors (16, 18) of the multiple mirror (10) are planar.

5. Device according to any one of the preceding claims, wherein the first and/or second mirror (16, 18) of the multiple mirror (10) is rotatable about an axis of rotation (20), which is preferably mounted in a frame of a mirror holder of the mirrors (16, 18).

6. Device according to claim 2, wherein one multiple mirror comprises a mirror which is tiltable relative to the other mirror and the other multiple mirror (10) comprises a mirror which is rotatable relative to the other mirror (16, 18) about an axis of rotation (20).

7. Device according to any one of the preceding claims, wherein the first mirror (16) polarizes the electromagnetic beam, wherein preferably the first mirror (16) reflects radiation of a certain polarization and transmits radiation of a different, preferably orthogonal thereto, polarization.

8. Device according to any one of the preceding claims, wherein a camera preferably designed as a color camera records the electromagnetic beam (11) passing through the multiple mirror (10).

9. Device for interferometric, optical measurement of a surface comprising
- a coherent light source emitting an electromagnetic beam (11),
- a beam splitter (102) which splits the beam (11) into a first partial beam in a first direction of propagation and into a second partial beam in a second direction of propagation,
- two mirrors (5, 6), one of which being a fixed mirror (5) and the other one being a movable mirror (6),
- two diaphragms (104),
- wherein respectively one diaphragm is arranged between the beam splitter (102) and the mirrors (5, 6) in such a manner that each partial beam respectively passes through one diaphragm (104) twice,
- wherein the two partial beams impinge on the beam splitter (102) after reflection at the mirrors and are merged again in the beam splitter,
- wherein the diaphragms (104) are being arranged in such a manner that, after merging the two partial beams in the beam splitter (102), the beam corresponds to a beam after passing through a double slit.

10. Device according to claim 9, wherein the merged beam is directed towards a camera after leaving the beam splitter (102), wherein a virtual double slit (4) is visible from the direction of the camera.

11. Device according to any one of the preceding claims, wherein at least one diaphragm (104) has an aperture (106) which preferably comprises a polarization filter or a frequency filter, so that only distinct wavelengths can pass through the diaphragm.

12. Device according to any one of the preceding claims, wherein at least one of the diaphragms (104) has two apertures, each of which preferably has a polarization filter, which are preferably aligned orthogonally to one another.

13. Device according to any one of the preceding claims, **characterized in that** one of the diaphragms (104) is designed as a grating diaphragm and preferably has certain slit widths of the apertures (106) in two dimensions, wherein the slit widths in particular have the same dimensions.

## Revendications

1. Dispositif pour la mesure optique interférométrique d'une surface, comprenant
une source de lumière cohérente émettant un faisceau électromagnétique (11);
deux séparateurs de faisceau (102);
deux diaphragmes (104);
un miroir multiple (10) avec deux plans de miroir espacés l'un de l'autre comprenant un premier miroir (16) sur lequel le faisceau entrant (11) tombe en premier et un deuxième miroir (18) sur lequel le faisceau (11) est réfléchi en dernier, les miroirs (16, 18) se superposant dans la direction de déplacement du premier front d'onde (12) et le premier miroir (16) étant partiellement transparent pour le faisceau électromagnétique (11) et le deuxième miroir (18) étant entièrement réfléchissant; et
où
le faisceau électromagnétique (11) tombe sur le premier séparateur de faisceau, est dirigé par le premier séparateur de faisceau (102) sur le miroir multiple (10) et tombe ensuite le deuxième séparateur de faisceau (102),
l'un des diaphragmes (104) étant disposé sur le trajet du faisceau entre les deux séparateurs de faisceau (102) de telle sorte que le faisceau passe par ce diaphragme (104).

2. Dispositif selon la revendication 1, comprenant un deuxième miroir multiple (10), le faisceau électromagnétique (11) tombant sur le premier séparateur de faisceau, étant divisé par le premier séparateur de faisceau (102) en deux directions de propagation et étant dirigé sur chacun des miroirs multiples (10), et les deux faisceaux partiels tombant ensuite sur le deuxième séparateur de faisceau (102),
l'un des diaphragmes (104) étant disposé dans le trajet du faisceau entre les deux séparateurs de faisceau (102) de telle sorte que chaque faisceau partiel passe par l'un des diaphragmes (104).

3. Dispositif selon la revendication 1 ou 2, conçu de telle sorte qu'un miroir (16, 18) du miroir multiple (10) peut être basculé par rapport à l'autre miroir (18, 16) de telle sorte que les miroirs (16, 18) forment un angle (19) et qu'un front d'onde (12) tombant sur le miroir multiple (10) est divisé en deux fronts d'onde sortants (14) mutuellement déphasés.

4. Dispositif selon la revendication 3, dans lequel les miroirs (16, 18) du miroir multiple (10) sont plans.

5. Dispositif selon l'une des revendications précédentes, dans lequel le premier et/ou le deuxième miroir (16, 18) du miroir multiple (10) sont rotatifs autour d'un axe de rotation (20), de préférence monté dans un cadre d'un support de miroir des miroirs (16, 18).

6. Dispositif selon la revendication 2, dans lequel l'un des miroirs multiples présente un miroir qui peut être basculé par rapport à l'autre miroir et l'autre miroir multiple (10) présente un miroir qui est rotatif par rapport à l'autre miroir (16, 18) autour d'un axe de rotation (20).

7. Dispositif selon l'une des revendications précédentes, dans lequel le premier miroir (16) polarise le rayonnement électromagnétique, de préférence le premier miroir (16) réfléchissant le rayonnement d'une polarisation déterminée et laissant passer le rayonnement d'une polarisation différente, de préférence orthogonale.

8. Dispositif selon l'une des revendications précédentes, dans lequel une caméra enregistre le faisceau électromagnétique (11) traversant le miroir multiple (10), cette caméra étant de préférence une caméra couleur.

9. Dispositif pour la mesure optique interférométrique d'une surface comprenant
- une source de lumière cohérente qui émet un faisceau électromagnétique (11),
- un séparateur de faisceau (102) qui divise le faisceau (11) en un premier faisceau partiel dans une première direction de propagation et en un deuxième faisceau partiel dans une deuxième direction de propagation,
- deux miroirs (5, 6), dont l'un est un miroir fixe (5) et l'autre un miroir mobile (6),
- deux diaphragmes (104),
- un diaphragme étant disposé entre le séparateur de faisceau (102) et chacun des miroirs (5, 6) de telle sorte que chaque faisceau partiel traverse respectivement deux fois un diaphragme (104),
- les deux faisceaux partiels rencontrant le séparateur de faisceau (102) après réflexion sur les miroirs et étant à nouveau fusionné dans celui-ci,
- les diaphragmes (104) étant disposés de telle sorte qu'après la fusion des deux faisceaux partiels dans le séparateur de faisceau (102), le faisceau correspond à un faisceau après passage à travers une double fente.

10. Dispositif selon la revendication 9, dans lequel le faisceau fusionné est dirigé vers une caméra après avoir quitté le séparateur de faisceau (102), une double fente virtuelle (4) étant visible depuis la direction de la caméra.

11. Dispositif selon l'une des revendications précédentes, dans lequel au moins l'un des diaphragmes (104) présente une ouverture (106) comprenant de préférence un filtre de polarisation ou un filtre de fréquence ne laissant passer que certaines longueurs d'onde.

12. Dispositif selon l'une des revendications précédentes, dans lequel au moins l'un des diaphragmes (104) comprend deux ouvertures, comprenant de préférence chacune un filtre de polarisation, orientés de préférence orthogonalement l'un par rapport à l'autre.

13. Dispositif selon l'une des revendications précédentes, **caractérisé en ce que** l'un des diaphragmes (104) est réalisé sous forme de diaphragme à grille et présente de préférence des largeurs de fente des ouvertures (106) déterminées en deux dimensions, les largeurs de fente ayant notamment les mêmes dimensions.
